# EUROPÄISCHE PATENTSCHRIFT

(11) **EP 1 470 944 B1**
(45) Veröffentlichungstag und Bekanntmachung des Hinweises auf die Patenterteilung: **08.08.2007**
(21) Anmeldenummer: 04101007.5
(22) Anmeldetag: 11.03.2004
(51) Int. Cl.: B60K 15/03

(54) **Kraftstoffbehälter**
Fuel tank
Réservoir de carburant

(30) Priorität: 25.04.2003 DE 10318844
(43) Veröffentlichungstag der Anmeldung: 27.10.2004
(73) Patentinhaber: SIEMENS AKTIENGESELLSCHAFT, 80333 München (DE)
(72) Erfinder: Krogull, Christian, 45899, Gelsenkirchen (DE); Reiter, Frank, 42781, Haan (DE)

(56) Entgegenhaltungen:
- EP-A- 0 712 752
- EP-A- 1 262 354
- DE-A- 10 021 054
- DE-C- 19 836 061
- US-A- 4 836 402

## Beschreibung

Die Erfindung betrifft einen Kraftstoffbehälter mit einem im Bodenbereich angeordneten Schwalltopf, mit einer Kraftstoff aus dem Schwalltopf ansaugenden Fördereinheit, mit einem Füllstandssensor zur Erfassung des im Kraftstoffbehälter befindlichen Füllstandes an Kraftstoff und mit einer im oberen Bereich des Kraftstoffbehälters angeordneten Entlüftungseinrichtung zur Entlüftung des Kraftstoffbehälters beim Betrieb und/oder beim Nachfüllen des Kraftstoffs, wobei der Schwalltopf, die Fördereinheit und der Füllstandssensor als außerhalb des Kraftstoffbehälter montierbares und in den Kraftstoffbehälter einsetzbares Modul gestaltet sind.

DE 10021054 offenbart einen Kraftstoffbehälter gemäß dem Oberbegriff des Anspruchs 1.

Solche Kraftstoffbehälter werden in heutigen Kraftfahrzeugen häufig eingesetzt und sind aus der Praxis bekannt. Der Kraftstoffbehälter wird dabei einstückig im Blasverfahren oder mehrstückig im Spritzgussverfahren gefertigt und weist eine Montageöffnung für das Modul auf. Bei dem im Spritzgussverfahren gefertigten Kraftstoffbehälter werden zunächst zumindest zwei Schalenteile gefertigt und diese anschließend miteinander verschweißt. Zur Montage wird das Modul außerhalb des Kraftstoffbehälters zusammengesetzt und durch die Montageöffnung in den Kraftstoffbehälter eingesetzt. Anschließend wird die Montageöffnung mit einem Verschlussdeckel verschlossen.

Nachteilig hierbei ist, dass sich hierdurch die Montage der Bauteile im Kraftstoffbehälter sehr aufwändig gestaltet. Weiterhin sind für die Befestigung des Moduls und der Entlüftungseinrichtung im Tank angeordnete Trägersysteme erforderlich, welche Volumen im Kraftstoffbehälter beanspruchen. Dieses Volumen steht anschließend nicht mehr zur Aufnahme des Kraftstoffs zur Verfügung.

Der Erfindung liegt das Problem zugrunde, einen Kraftstoffbehälter der eingangs genannten Art so zu gestalten, dass er ein möglichst großes Volumen zur Aufnahme von Kraftstoff hat und möglichst einfach montierbar ist.

Dieses Problem wird erfindungsgemäß durch die Merkmale des Anspruchs 1 gelöst.

Durch diese Gestaltung lassen sich das Modul und die Entlüftungseinrichtung in einem Arbeitsgang in dem erfindungsgemäßen Kraftstoffbehälter montieren. Dies geschieht vorzugsweise während des Blasverfahrens oder bei einem mehrschaligen Kraftstoffbehälter vor einem Verschweißen der Schalenteile. Hierdurch lässt sich der erfindungsgemäße Kraftstoffbehälter besonders einfach montieren. Im einfachsten Fall benötigt der erfindungsgemäße Kraftstoffbehälter keine Montageöffnung für die Entlüftungseinrichtung und das Modul. Damit wird ein Entweichen von Kraftstoff aus dem Kraftstoffbehälter, beispielsweise durch Undichtigkeiten, Diffusion oder Permeation besonders gering gehalten. Da die Entlüftungseinrichtung unmittelbar an dem Modul befestigt ist, wird zudem kein Trägersystem der Entlüftungseinrichtung an der Wandung des Kraftstoffbehälters benötigt. Der erfindungsgemäße Kraftstoffbehälter hat hierdurch ein besonders großes, zur Aufnahme von Kraftstoff verfügbares Volumen.

Zur weiteren Vereinfachung der Montage des erfindungsgemäßen Kraftstoffbehälters trägt es bei, wenn die vormontierbare Einheit am Boden des Kraftstoffbehälters befestigt ist.

Bei einer Durchbiegung des Bodens des Kraftstoffbehälters lässt sich gemäß einer anderen vorteilhaften Weiterbildung der Erfindung ein Eintauchen von Öffnungen der Entlüftungseinrichtung in den Kraftstoff zuverlässig vermeiden, wenn Öffnungen der Entlüftungseinrichtung gegen eine obere Wandung des Kraftstoffbehälters vorgespannt sind.

Häufig wird der Schwalltopf bei einem Nachtanken des Kraftstoffbehälters bevorzugt befüllt. Eine solche bevorzugte Befüllung erfordert gemäß einer anderen vorteilhaften Weiterbildung der Erfindung einen besonders geringen baulichen Aufwand, wenn die vormontierbare Einheit eine von dem Schwalltopf bis zu einem Einfüllstutzen des Kraftstoffbehälters geführte Befüllleitung hat.

Zur Bestimmung des Füllstandes ist ein Füllstandssensor an der vormontierbaren Einheit, vorzugsweise am Schwalltopf, angeordnet. Als Füllstandssensoren können Hebelgeber, Tauchrohrgeber, Ultraschallgeber, kapazitive oder thermo-elektrische Geber zum Einsatz kommen.

Die bauliche Einheit gestaltet sich gemäß einer anderen vorteilhaften Weiterbildung der Erfindung besonders kompakt, wenn ein Anschluss der Befüllleitung an dem Schwalltopf ein Schwimmerabschaltventil zur Sperrung der Zufuhr von Kraftstoff bei gefülltem Schwalltopf aufweist. Es ist aber auch ein Tauchrohr, ein Magnetschwimmerabschaltventil oder ein elektro-magnetisches Ventil für die Befüllbegrenzung denkbar.

Der erfindungsgemäße Kraftstoffbehälter benötigt eine besonders geringe Anzahl von Bauteilen, wenn die Entlüftungseinrichtung auf einem Aufsatz des Schwalltopfes befestigt ist. Durch die geringe Anzahl der Bauteile lässt sich der erfindungsgemäße Kraftstoffbehälter besonders kostengünstig fertigen.

Die Entlüftungseinrichtung gestaltet sich gemäß einer anderen vorteilhaften Weiterbildung der Erfindung konstruktiv besonders einfach, wenn sie ein mit dem Aufsatz des Schwalltopfes verbundenes Grundteil und über Leitungen mit dem Grundteil verbundene Seitenteile hat, wenn die Seitenteile und das Grundteil über Federarme miteinander verbunden sind und wenn Öffnungen der Entlüftungseinrichtung an den Seitenteilen angeordnet sind. Die Federarme vermögen die Seitenteile und damit die Öffnungen der Entlüftungseinrichtung gegen die obere Wandung des erfindungsgemäßen Kraftstoffbehälters vorspannen.

Zur weiteren Verringerung der Anzahl der Bauteile des erfindungsgemäßen Kraftstoffbehälters trägt es bei, wenn das Grundteil der Entlüftungseinrichtung oder der Aufsatz des Schwalltopfes einen Anschluss für eine Vorlaufleitung aufweist. Vorzugsweise haltert das Grundteil zudem ein Roll-Over-Ventil zur Absperrung des Anschlusses bei einem Überschlag des den erfindungsgemäßen Kraftstoffbehälter aufweisenden Kraftfahrzeuges.

Zur weiteren Verringerung der Abmessungen der vormontierbaren Einheit trägt es gemäß einer anderen vorteilhaften Weiterbildung der Erfindung bei, wenn der Aufsatz des Schwalltopfes als Gehäuse für eine Elektronik ausgebildet ist. Eine solche Elektronik wird in der Regel zur Ansteuerung des Elektromotors der Fördereinheit oder zur Erfassung von Signalen des Füllstandssensors eingesetzt.

In der Regel weisen Schwalltöpfe eine Abdeckung auf. Ein separat zu montierendes Bauteil zur Abdeckung des Schwalltopfes lässt sich gemäß einer anderen vorteilhaften Weiterbildung der Erfindung einfach vermeiden, wenn das Grundteil der Entlüftungseinrichtung den Schwalltopf nach oben hin abdeckt.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: schematisch eine Schnittdarstellung durch einen erfindungsgemäßen Kraftstoffbehälter,
- Fig.2: eine perspektivische Darstellung einer vormontierbaren Einheit des erfindungsgemäßen Kraftstoffbehälters aus Figur 1.

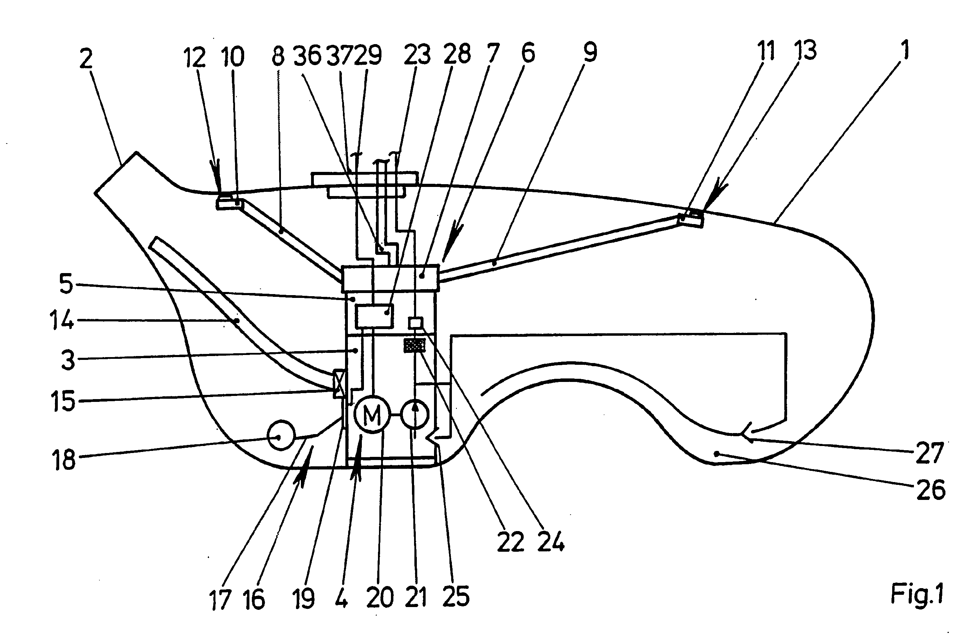

Figur 1 zeigt einen Kraftstoffbehälter 1 eines Kraftfahrzeuges mit einem Einfüllstutzen 2 und mit einer in einem Schwalltopf 3 angeordneten Fördereinheit 4. Der Schwalltopf 3 ist an dem Boden des Kraftstoffbehälters 1 befestigt und hat einen Aufsatz 5 zur Halterung einer Entlüftungseinrichtung 6. Die Entlüftungseinrichtung 6 hat ein auf dem Aufsatz 5 befestigtes Grundteil 7, zwei über Leitungen 8, 9 mit dem Grundteil 7 verbundene und gegen die obere Wandung des Kraftstoffbehälters 1 vorgespannte Seitenteile 10, 11 und eine Be- und Entlüftungsleitung 36, die durch einen den Kraftstoffbehälter 1 verschließenden Verschluss 37 geführt ist. An den Seitenteilen 10, 11 sind Öffnungen 12, 13 der Entlüftungseinrichtung 6 angeordnet. Der Schwalltopf 3 ist über eine Befüllleitung 14 mit dem Einfüllstutzen 2 des Kraftstoffbehälters 1 verbunden. Damit wird sichergestellt, dass bei einem Nachtanken des Kraftstoffbehälters 1 der Schwalltopf 3 zuerst befüllt wird. Eine Überfüllung des Schwalltopfes 3 wird durch ein im Anschluss der Befüllleitung 14 an dem Schwalltopf 3 angeordnetes Schwimmerabschaltventil 15 verhindert. Bei vollem Schwalltopf 3 gelangt der Kraftstoff unmittelbar in den Kraftstoffbehälter 1. An der Außenseite des Schwalltopfes 3 ist ein Füllstandssensor 16 mit einem an einem Hebelarm 17 angeordneten Schwimmer 18 befestigt. Die Auslenkung des Hebelarms 17 und damit der Füllstand an Kraftstoff im Kraftstoffbehälter 1 wird über einen Hebelgeber 19 in elektrische Signale umgewandelt.

Die Fördereinheit 4 hat eine von einem Elektromotor 20 angetriebene Kraftstoffpumpe 21. Die Kraftstoffpumpe 21 fördert Kraftstoff aus dem Schwalltopf 3 durch einen Kraftstofffilter 22 in eine zu einer nicht dargestellten Brennkraftmaschine des Kraftfahrzeuges führenden Vorlaufleitung 23. Die Vorlaufleitung 23 durchdringt das Grundteil 7 der Entlüftungseinrichtung 6. In dem Aufsatz 5 des Schwalltopfes 3 ist ein Roll-Over-Ventil 24 angeordnet, welches die Vorlaufleitung 23 bei einem Überschlag des Kraftfahrzeuges verschließt. Weiterhin fördert die Kraftstoffpumpe 21 Kraftstoff zu einer im Schwalltopf 3 angeordneten Saugstrahlpumpe 25 und zu einer in einer Nebenkammer 26 angeordneten Saugstrahlpumpe 27. Über die in der Nebenkammer 26 angeordnete Saugstrahlpumpe 27 wird Kraftstoff zu dem Schwalltopf 3 gefördert.

Eine Elektronik 28 ist im Aufsatz 5 des Schwalltopfes 3 angeordnet und mit dem Hebelgeber 19 und mit dem Elektromotor 20 der Fördereinheit 4 verbunden. Weiterhin hat die Elektronik 28 aus dem Kraftstoffbehälter 1 führende Leitungen 29. Über diese Leitungen 29 wird der Elektromotor 20 mit elektrischem Strom versorgt und Signale des Füllstandssensors 16 einer nicht dargestellten Anzeige im Kraftfahrzeug zugeführt.

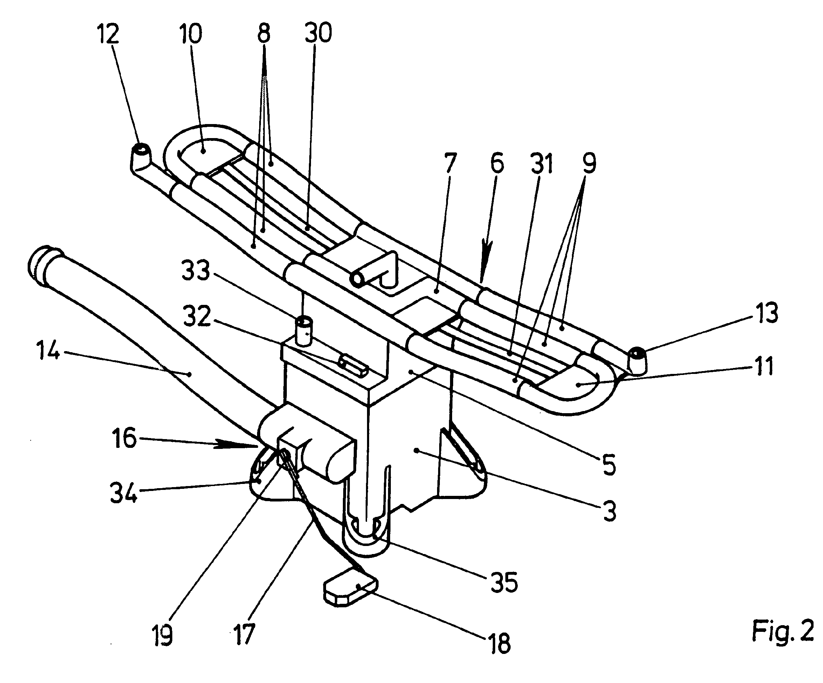

Figur 2 zeigt perspektivisch ein Modul aus Schwalltopf 3 und Füllstandssensor 16. Das Modul ist mit der Entlüftungseinrichtung 6 als vormontierte bauliche Einheit gestaltet. Die in Figur 2 dargestellte, vormontierte bauliche Einheit wird während der Fertigung des Kraftstoffbehälters 1 im Blasverfahren oder vor der Verschweißung zweier Halbschalen des in Figur 1 dargestellten Kraftstoffbehälters 1 an dessen Boden befestigt. Nach der Fertigung des Kraftstoffbehälters 1 sind die Seitenteile 10, 11 der Entlüftungseinrichtung 6 gegen die obere Wandung des Kraftstoffbehälters 1 vorgespannt. Zur Vorspannung gegen die obere Wandung sind die Seitenteile 10, 11 über Federarme 30, 31 mit dem Grundteil 7 verbunden. Der Aufsatz 5 des Schwalltopfes 3 trägt elektrische Anschlüsse 32 für die in Figur 1 dargestellte Elektronik 28 und einen Anschluss 33 für die Vorlaufleitung 23. Weiterhin zeigt Figur 2, dass das Grundteil 7 der Entlüftungseinrichtung 6 ebenfalls eine Öffnung aufweist. Diese dient der Entlüftung des Schwalltopfes 3. Zur Befestigung am Boden des Kraftstoffbehälters hat der Schwalltopf 3 Befestigungslaschen 34, 35, an denen nicht dargestellte Puffer zur akustischen Entkopplung angeordnet sind.

## Patentansprüche

1. Kraftstoffbehälter mit einem im Bodenbereich angeordneten Schwalltopf, mit einer Kraftstoff aus dem Schwalltopf ansaugenden Fördereinheit, mit einem Ftillstandssensor zur Erfassung des im Kraftstoffbehälter befindlichen Füllstandes an Kraftstoff und mit einer im oberen Bereich des Kraftstoffbehälters angeordneten Entlüftungseinrichtung zur Entlüftung des Kraftstoffbehälters beim Betrieb und/oder beim Nachfüllen des Kraftstoffs, wobei der Schwalltopf, die Fördereinheit und der Füllstandssensor als außerhalb des Kraftstoffbehälter montierbares und in den Kraftstoffbehälter einsetzbares Modul gestaltet sind, wobei die Entlüftungseinrichtung (6) mit dem Modul als vormontierbare bauliche Einheit ausgebildet ist, **dadurch gekennzeichnet, dass** die Entlüftungseinrichtung (6) auf einem Aufsatz (5) des Schwalltopfes (3) befestigt ist, dass die Entlüftungseinrichtung (6) ein mit dem Aufsatz (5) des Schwalltopfes (3) verbundenes Grundteil (7) und über Leitungen (B, 9) mit dem Grundteil (7) verbundene Seitenteile (10, 11) hat, dass die Seitenteile (10, 11) und das Grundteil (7) über Federarme (30, 31) miteinander verbunden sind und dass Öffnungen (12, 13) der Entlüftungseinrichtung (6) an den Seitenteilen (10, 11) angeordnet sind.

2. Kraftstoffbehälter nach Anspruch 1, **dadurch gekennzeichnet, dass** die vormontierbare Einheit am Boden des Kraftstoffbehälters (1) befestigt ist.

3. Kraftstoffbehälter nach Anspruch 1 oder 2, **dadurch gekennzeichnet, dass** Öffnungen (12, 13) der Entlüftungseinrichtung (6) gegen eine obere Wandung des Kraftstoffbehälters (1) vorgespannt sind.

4. Kraftstoffbehälter nach zumindest einem der vorhergehenden Ansprüche, **dadurch gekennzeichnet, dass** die vormontierbare Einheit eine von dem Schwalltopf (3) bis zu einem Einfüllstutzen (2) des Kraftstoffbehälters (1) geführte Befüllleitung (14) hat.

5. Kraftstoffbehälter nach zumindest einem der vorhergehenden Ansprüche, **dadurch gekennzeichnet, dass** ein Anschluss der Befüllleitung (14) an dem Schwalltopf (3) ein Schwimmerabschaltventil (15) zur Sperrung der Zufuhr von Kraftstoff bei gefülltem Schwalltopf (3) aufweist.

6. Kraftstoffbehälter nach zumindest einem der vorhergehenden Ansprüche, **dadurch gekennzeichnet, dass** das Grundteil (7) der Entlüftungseinrichtung (6) oder der Aufsatz (5) des Schwalltopfes (3) einen Anschluss (33) für eine Vorlaufleitung (23) aufweist.

7. Kraftstoffbehälter nach zumindest einem der vorhergehenden Ansprüche, **dadurch gekennzeichnet, dass** der Aufsatz (5) des Schwalltopfes (3) als Gehäuse für eine Elektronik (28) ausgebildet ist.

8. Kraftstoffbehälter nach zumindest einem der vorhergehenden Ansprüche, **dadurch gekennzeichnet, dass** das Grundteil (7) der Entlüftungseinrichtung (6) den Schwalltopf (3) nach oben hin abdeckt.

## Claims

1. Fuel tank having a surge chamber arranged in the bottom region, having a feed unit which sucks up fuel from the surge chamber, having a level sensor for detecting the fuel level in the fuel tank, and having a venting device which is arranged in the upper region of the fuel tank and is intended for venting the fuel tank during operation and/or when replenishing the fuel, the surge chamber, the feed unit and the level sensor being designed as a module which can be fitted outside the fuel tank and can be inserted into the fuel tank, wherein the venting device (6) is formed together with the module as a constructional unit which can be preassembled, **characterized in that** the venting device (6) is fastened on an attachment (5) of the surge chamber (3), **characterized in that** the venting device (6) has a base part (7) connected to the attachment (5) of the surge chamber (3), and side parts (10, 11) connected to the base part (7) via lines (8, 9), **in that** the side parts (10, 11) and the base part (7) are connected to one another via spring arms (30, 31), and **in that** openings (12, 13) of the venting device (6) are arranged on the side parts (10, 11).

2. Fuel tank according to claim 1, **characterized in that** the preassembleable unit is fastened to the bottom of the fuel tank (1).

3. Fuel tank according to claim 1 or 2, **characterized in that** openings (12, 13) of the venting device (6) are prestressed against an upper wall of the fuel tank (1).

4. Fuel tank according to at least one of the preceding claims, **characterized in that** the preassembleable unit has a filling line (14) which is guided from the surge chamber (3) as far as a filler neck (2) of the fuel tank (1).

5. Fuel tank according to at least one of the preceding claims, **characterized in that** a connection of the filling line (14) to the surge chamber (3) has a float-type shutoff valve (15) for blocking the supply of fuel when the surge chamber (3) is full.

6. Fuel tank according to at least one of the preceding claims, **characterized in that** the base part (7) of the venting device (6) or the attachment (5) of the surge chamber (3) has a connection (33) for a forward-flow line (23).

7. Fuel tank according to at least one of the preceding claims, **characterized in that** the attachment (5) of the surge chamber (3) is designed as a housing for an electronic system (28).

8. Fuel tank according to at least one of the preceding claims, **characterized in that** the base part (7) of the venting device (6) upwardly covers the surge chamber (3).

## Revendications

1. Réservoir à carburant comportant un pot d'accumulation placé dans la zone du fond, une unité de refoulement aspirant du carburant dans le pot d'accumulation, un capteur du niveau de remplissage destiné à détecter le niveau de remplissage en carburant dans le réservoir à carburant et un dispositif d'aération placé dans la partie supérieure du réservoir à carburant et destiné à dégazer le réservoir à carburant pendant la marche et/ou lors du remplissage du carburant, où le pot d'accumulation, l'unité de refoulement et le capteur du niveau de remplissage forment un module pouvant être installé à l'extérieur du réservoir à carburant et pouvant être inséré dans le réservoir à carburant, où le dispositif d'aération (6) constitue avec le module une unité constructive prémontée, **caractérisé par le fait que** le dispositif d'aération (6) est fixé sur une chapeau (5) du pot d'accumulation (3), que le pot d'accumulation (6) a une pièce de base (7) liée au chapeau (5) du pot d'accumulation (3) et des pièces latérales (10, 11) liées par l'intermédiaire de conduites (8, 9) à la pièce de base (7), que les pièces latérales (10, 11) et la pièce de base (7) sont liées ensemble par l'intermédiaire de bras à ressort (30, 31) et que des ouvertures (12, 13) du dispositif d'aération (6) sont placées sur les pièces latérales (10, 11).

2. Réservoir à carburant selon la revendication 1, **caractérisé par le fait que** l'unité prémontée est fixée sur le fond du réservoir à carburant (1).

3. Réservoir à carburant selon la revendication 1 ou 2, **caractérisé par le fait que** des ouvertures (12, 13) du dispositif d'aération (6) sont appliquées avec une force de précontrainte contre une paroi supérieure du réservoir à carburant (1).

4. Réservoir à carburant selon au moins l'une des revendications précédentes, **caractérisé par le fait que** l'unité prémontée a une conduite de remplissage (14) conduisant du pot d'accumulation (3) jusqu'à une tubulure de remplissage (2) du réservoir à carburant (1).

5. Réservoir à carburant selon au moins l'une des revendications précédentes, **caractérisé par le fait qu'**un raccord de la conduite de remplissage (14) sur le pot d'accumulation (3) comporte une soupape d'arrêt (15) à flotteur qui stoppe l'écoulement de carburant lorsque le pot d'accumulation (3) est plein.

6. Réservoir à carburant selon au moins l'une des revendications précédentes, **caractérisé par le fait que** la pièce de base (7) du dispositif d'aération (6) ou le chapeau (5) du pot d'accumulation (3) comportent un raccord (33) pour une conduite d'alimentation (23).

7. Réservoir à carburant selon au moins l'une des revendications précédentes, **caractérisé par le fait que** le chapeau (5) du pot d'accumulation (3) est conçu comme boîtier pour un système électronique (28).

8. Réservoir à carburant selon au moins l'une des revendications précédentes, **caractérisé par le fait que** la pièce de base (7) du dispositif d'aération (6) recouvre le pot d'accumulation (3) vers le haut.
